(19) Europäisches Patentamt
European Patent Office
Office européen des brevets

(11) **EP 3 993 256 B1**

(12) **EUROPEAN PATENT SPECIFICATION**

(45) Date of publication and mention
of the grant of the patent:
**08.11.2023 Bulletin 2023/45**

(21) Application number: **20930643.0**

(22) Date of filing: **22.12.2020**

(51) International Patent Classification (IPC):
*H02P 21/22* (2016.01)      *H02P 21/05* (2006.01)
*H02P 29/50* (2016.01)

(52) Cooperative Patent Classification (CPC):
**H02P 21/22; H02P 21/05; H02P 29/50;**
H02P 2207/05; Y02P 80/10

(86) International application number:
**PCT/CN2020/138182**

(87) International publication number:
**WO 2021/203734 (14.10.2021 Gazette 2021/41)**

(54) **RESONANCE SUPPRESSION METHOD AND SYSTEM FOR ELECTROLYTIC CAPACITOR-FREE VARIABLE FREQUENCY DRIVING SYSTEM**

VERFAHREN UND SYSTEM ZUR RESONANZUNTERDRÜCKUNG FÜR EIN ELEKTROLYTKONDENSATORFREIES ANTRIEBSSYSTEM MIT VARIABLER FREQUENZ

PROCÉDÉ ET SYSTÈME DE SUPPRESSION DE RÉSONANCE POUR SYSTÈME D'ENTRAINEMENT À FRÉQUENCE VARIABLE SANS CONDENSATEUR ÉLECTROLYTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.04.2020 CN 202010280745**

(43) Date of publication of application:
**04.05.2022 Bulletin 2022/18**

(73) Proprietor: **Huazhong University of Science and Technology**
**Wuhan**
**Hubei 430074 (CN)**

(72) Inventors:
• **YIN, Quan**
**Wuhan, Hubei 430074 (CN)**
• **LI, Haichun**
**Wuhan, Hubei 430074 (CN)**
• **LUO, Hui**
**Wuhan, Hubei 430074 (CN)**
• **LIU, Yang**
**Wuhan, Hubei 430074 (CN)**

(74) Representative: **Becker Kurig & Partner Patentanwälte mbB**
**Bavariastraße 7**
**80336 München (DE)**

(56) References cited:
**CN-A- 105 356 468      CN-A- 107 689 761**
**CN-A- 107 689 761      CN-A- 110 536 516**
**CN-A- 111 342 731      US-A1- 2007 030 706**

• **ZHAO NANNAN ET AL: "An Active Damping Control Method for Reduced DC-Link Capacitance IPMSM Drives", IEEE TRANSACTIONS ON INDUSTRIAL ELECTRONICS, IEEE SERVICE CENTER, PISCATAWAY, NJ, USA, vol. 65, no. 3, March 2018 (2018-03), pages 2057-2068, XP011674646, ISSN: 0278-0046, DOI: 10.1109/TIE.2017.2748062 [retrieved on 2017-12-14]**
• **LEE WOOK-JIN ET AL: "DC-Link Voltage Stabilization for Reduced DC-Link Capacitor Inverter", IEEE TRANSACTIONS ON INDUSTRY APPLICATIONS, IEEE SERVICE CENTER, PISCATAWAY, NJ, US, vol. 50, no. 1, January 2014 (2014-01), pages 404-414, XP011537458, ISSN: 0093-9994, DOI: 10.1109/TIA.2013.2268733 [retrieved on 2014-01-16]**

• Zhao Nannan: "Research on Electrolytic Capacitor-Less Permanent Magnet Compressor Drives for Air-conditioner Applications", Chinese Doctoral Dissertations Full-text Database, 1 July 2019 (2019-07-01), pages 1-141, XP055855914, DOI: 10.27061/d.cnki.ghgdu.2019.000497

**Description**

**BACKGROUND**

Technical Field

The present invention relates to the technical field of permanent magnet synchronous motor drive control, and in particular, relates to a resonance suppression method and system for an electrolytic capacitor-free variable frequency driving system.

Description of Related Art

In the traditional AC-DC-AC variable frequency driving system, due to the existence of electrolytic capacitors, the entire variable frequency driving system is bulky and costly and provides a low service life. Moreover, the input power factor is low, and the grid-side current harmonics are provided. Therefore, a film capacitor or a ceramic capacitor is used to replace a traditional electrolytic capacitor, that is, an electrolytic capacitor-free variable frequency driving system.

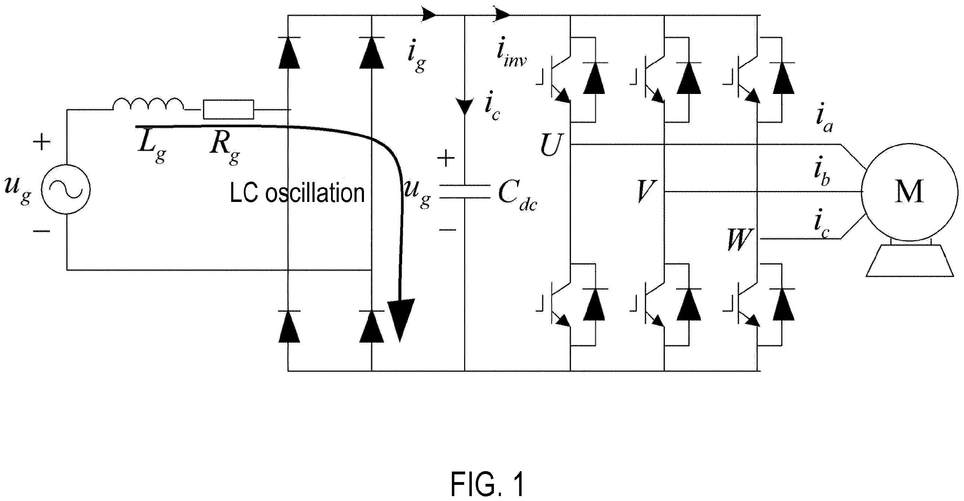

The topological structure of the main circuit of the electrolytic capacitor-free permanent magnet synchronous motor variable frequency driving system is shown in FIG. 1. In the drawing, $L_g$ and $C_{dc}$ respectively are the grid-side input inductor and bus capacitor, and $R_g$ is the input line resistor. Since there is no electrolytic capacitor for energy storage and smoothing, the bus voltage periodically fluctuates. Besides, the resistance of the input line resistor $R_g$ is excessively low and the damping ability of the system is excessively weak, an LC resonance may thus be easily formed between the inductor $L_g$ and the capacitor $C_{dc}$ .

Both the input current and the bus voltage contain LC oscillation components, the harmonics of the input current on the grid side increase, and the power factor also decreases. The quality of the input on the grid side of the system is seriously affected, and the grid side current is polluted. At present, the methods for suppressing LC harmonic oscillation are mainly divided into passive damping and active damping. Passive damping requires the addition of resistors, inductors, and capacitors, which increases the power consumption of the system.

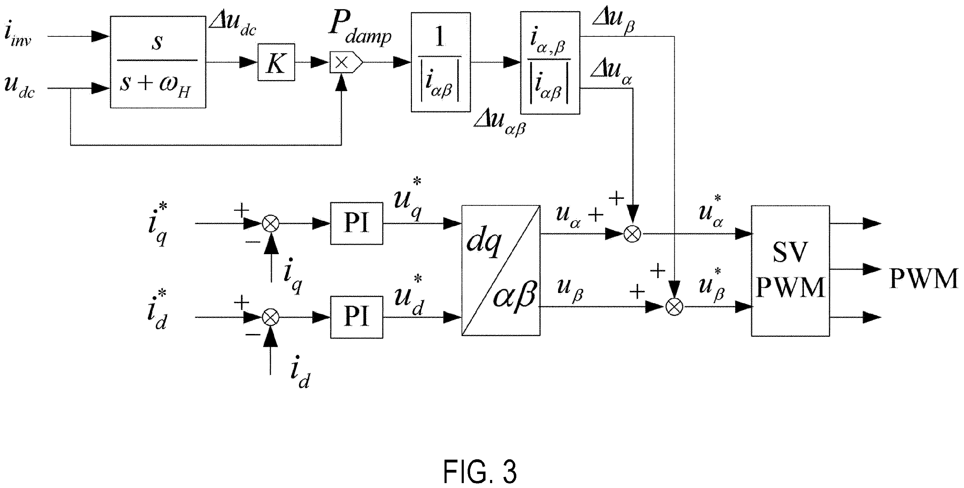

In active damping, the hardware does not need to be modified, and a new damping loop is constructed through software, which has greater advantages in engineering applications. However, in the current active damping control method, pumping of the bus voltage when the motor is braking is not taken into account. As shown in FIG. 3, the pumping of the bus voltage may also be detected by the high-pass filter. When the damping voltage is superimposed on the motor terminal, the active damping control may suppress the rise of the bus voltage, and the bus may be in a low voltage state, causing the input current to be clamped at zero current at all times. The clamping time increases, the conduction angle of the rectifier diode in FIG. 1 decreases, the sine of the grid current becomes worse, the current harmonics increase, and the power factor decreases.

Zhao Nannan et al: "An Active Damping Control Method for Reduced DC Link Capacitance IPMSM Drives", IEEE transactions on Industrial Electronics, vol. 65, no. 3, 1 March 2018, pages 2057-2068, relates to an active damping control method to suppress the LC resonance by the direct damping current approach, which can formulate the pole distribution of the drive system.

Lee Wook Jin et al: "DC Link Voltage Stabilization for Reduced DC Link Capacitor Inverter", IEEE transactions on Industrial Electronics, vol. 50, no. 1, 1 January 2014, pages 404-414, relates to a DC-link voltage stabilization algorithm using an active damping so that the DC-link voltage can be stabilized with reduced DC-link capacitor. To achieve load-/source-independent stabilization, a source state estimator which estimates both source voltage and current is also proposed.

CN 107689761 A relates to a damping control method in a non-electrolytic capacitance permanent-magnet synchronous-motor air conditioning drive system and a method for inhibiting resonance in the built-in permanent-magnet synchronous-motor air conditioning drive system.

**SUMMARY**

Regarding the abovementioned defects or the requirement for improvement in the related art, the present invention provides a resonance suppression method and system for an electrolytic capacitor-free variable frequency driving system, which aim to solve the technical problems of current harmonic increase and power factor decrease due to the fact that bus voltage pumping during motor braking is not considered in a current active damping control method. The invention is set out in the appended set of claims. The following disclosure serves a better understanding of the present invention.

To achieve the above, according to the present invention, a resonance suppression method for an electrolytic capacitor-free variable frequency driving system is provided, and the method includes:

S 1: a pre-designed high-pass filter extracts a bus voltage harmonic component.

S2: a bus voltage resonance component is multiplied by a feedback proportional gain to obtain a damping current of the system.

S3: the damping current is multiplied by a current bus voltage to obtain equivalent damping power at an input side of the inverter, and LC oscillation at an input side of the driving system is converted to an output side of the inverter.

S4: the equivalent damping power at the input side of the inverter is divided by a current output current of the inverter to obtain an equivalent damping output voltage of the inverter, and damping injection voltages of the equivalent damping output voltage allocated to a $\alpha$ axis and a $\beta$ axis are calculated according to currents of the $\alpha$ axis and the $\beta$ axis of a motor.

S5: the equivalent damping output voltage is superimposed onto the damping voltage of the $\alpha$ axis and the damping voltage of the $\beta$ axis, so that the resonance component is absorbed by a motor current, and the LC resonance suppression is implemented.

Further, a cut-off frequency $\omega_H$ of the pre-designed high-pass filter is:

$$\omega_H \le \frac{\omega_r}{2}$$

$$\omega_r = \frac{1}{\sqrt{L_g C_{dc}}}$$

In the formula, $L_g$ is a grid-side input inductor, $C_{dc}$ is a bus capacitor, and $\omega_r$ is a resonance frequency between $L_g$ and $C_{dc}$.

Further, a bus voltage harmonic component $\Delta u_{dc}$ is extracted according to the following formula

$$\Delta u_{dc} = \begin{cases} \dfrac{s}{s + \omega_H}(u_{dc} - |u_g|) & i_{inv} > 0 \\ 0 & i_{inv} <= 0 \end{cases}$$

In the formula, $u_{dc}$ is a bus voltage of the driving system, $u_g$ is a grid-side input voltage, that is, a fundamental component of the bus voltage, and $i_{inv}$ is an input current of the inverter.

Further, the feedback proportional gain K in step S2 is:

$$K = 2\varepsilon\sqrt{\frac{C_{dc}}{L_g}}$$

In the formula, $\varepsilon$ is a damping ratio of an electrolytic capacitor-free permanent magnet synchronous motor variable frequency driving system.

Further, the equivalent damping output voltage $\Delta u_{\alpha\beta}$ of the inverter in step S3 is calculated as

$$\Delta u_{\alpha\beta} = \frac{P_{damp}}{\sqrt{i_\alpha^2 + i_\beta^2}}$$

Herein, $i_\alpha$ and $i_\beta$ are the currents of the $\alpha$ axis and the $\beta$ axis in a $\alpha\beta$ coordinate system, and $P_{damp}$ is the equivalent damping power at the input side of the inverter.

Further, the damping injection voltages $\Delta u_\alpha$ and $\Delta u_\beta$ of the $\alpha$ axis and the $\beta$ axis in step S4 are calculated as:

$$\begin{cases} \Delta u_\alpha = \Delta u_{\alpha\beta} \dfrac{i_\alpha}{\sqrt{i_\alpha^2 + i_\beta^2}} \\ \\ \Delta u_\beta = \Delta u_{\alpha\beta} \dfrac{i_\beta}{\sqrt{i_\alpha^2 + i_\beta^2}} \end{cases}.$$

According to another aspect of the present invention, a resonance suppression system for an electrolytic capacitor-free variable frequency driving system is further provided, and the system adopts the resonance suppression method for the electrolytic capacitor-free variable frequency driving system.

In general, the above technical solutions provided by the present invention have the following beneficial effects compared with the related art.

The high-pass filter is designed to extract the LC resonance component in the bus voltage first, and the bus voltage damping feedback control loop is then designed to calculate the damping current in the present invention. According to the power balance relationship, the damping current is converted into the current terminal voltage of the motor, injected into the motor reference coordinate system, and finally absorbed by the permanent magnet synchronous motor to achieve the suppression of LC resonance. Through the improvement of the high-pass filter in the method provided by the present invention, when the grid current is clamped, the bus voltage is allowed to pump, and the grid current clamping time is reduced to make it closer to the sine wave, and that the grid current harmonics are reduced in this way. Through this method, not only may the LC resonance in the driving system be effectively suppressed, but the power factor of the electrolytic capacitor-free driving system may also be improved, calculations are simple, and digital implementation may be easily performed. This method exhibits important theoretical and practical significance for improving the quality of the grid-side current of the driving system.

## BRIEF DESCRIPTION OF THE DRAWINGS

FIG. 1 is a diagram of an overall structure of an electrolytic capacitor-free permanent magnet synchronous motor variable frequency driving system in the related art.

FIG. 2 is a diagram of an equivalent circuit at a grid side of the electrolytic capacitor-free permanent magnet synchronous motor variable frequency driving system in the related art.

FIG. 3 is a diagram of a control structure of a resonance suppression method for an electrolytic capacitor-free variable frequency driving system according to an embodiment of the present invention.

FIG. 4 is a diagram of a control structure of a bus voltage damping feedback according to an embodiment of the present invention.

FIG. 5 is a diagram of the equivalent circuit after damping current injection according to an embodiment of the present invention.

FIG. 6 is a waveform of a grid current without the use of a resonance suppression strategy according to an embodiment of the present invention.

FIG. 7 is an analysis diagram of the grid current without the use of a resonance suppression strategy according to an embodiment of the present invention.

FIG. 8 is a waveform of a grid current with the use of a conventional damping control method without considering a current direction of an inverter according to an embodiment of the present invention.

FIG. 9 is a comparison diagram of grid current harmonic analysis with the use of a conventional damping control method according to an embodiment of the present invention.

FIG. 10 is a waveform of a grid current with the use of the resonance suppression method provided by the present invention according to an embodiment of the present invention.

FIG. 11 is a diagram of harmonic analysis of the grid current with the use of the resonance suppression method provided by the present invention according to an embodiment of the present invention.

## DESCRIPTION OF THE EMBODIMENTS

In order to make the objectives, technical solutions, and advantages of the present invention clearer and more comprehensible, the present invention is further described in detail with reference to the drawings and embodiments. It should be understood that the specific embodiments described herein serve to explain the present invention merely. In addition, the technical features involved in the various embodiments of the present invention described below can be combined with each other as long as the technical features do not conflict with each other.

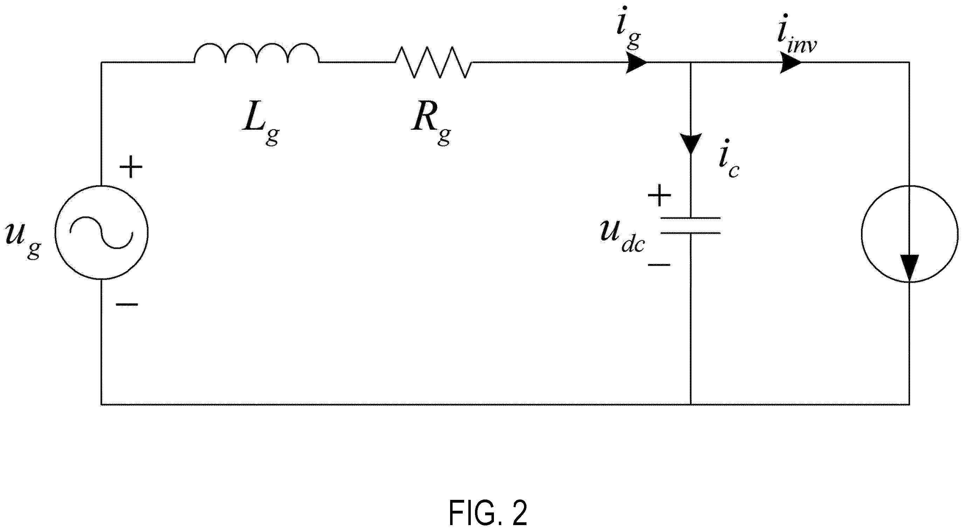

FIG. 2 is a diagram of an equivalent circuit of a small signal of an electrolytic capacitor-free permanent magnet synchronous motor variable frequency driving system, where $i_g$ is an input current of a grid, $i_c$ is an input current of a bus capacitor, $u_{dc}$ is a bus voltage, and $i_{inv}$ is an input current of an inverter. The inverter and the motor may be equivalent to a variable current source, and an output current is determined by a current load of the motor. With reference to FIG. 2, the bus voltage fluctuations contain a resonance component, which may be extracted from the bus voltage to control damping of the system to suppress resonance.

With reference to FIG. 3, the present invention provides a resonance suppression method for an electrolytic capacitor-free variable frequency driving system, and the method includes:

S1: a pre-designed high-pass filter extracts a bus voltage harmonic component.

To be specific, a high-pass filter HPF is designed to extract a resonance component $\Delta u_{dc}$ in a bus voltage. Such extraction may be performed through the following:

$$\Delta u_{dc} = \begin{cases} \dfrac{s}{s + \omega_H}(u_{dc} - |u_g|) & i_{inv} > 0 \\ 0 & i_{inv} <= 0 \end{cases} \quad (1)$$

In the formula, $u_{dc}$ is the bus voltage of the driving system, $u_g$ is a grid-side input voltage, where it represents a fundamental component of the bus voltage, and $i_{inv}$ is an input current of an inverter. $i_{inv} > 0$ means that a permanent magnet synchronous motor is working in an electric state, and $i_{inv} <= 0$ means that the permanent magnet synchronous motor is working in a power generation state. The current flows from the motor side to a bus capacitor and charges the capacitor, and the bus voltage increases. Pumping of the bus voltage at this time is not a LC resonance component. If the pumping of the bus voltage is suppressed at this time, turning-on time of a rectifier diode may be delayed, a conduction angle of the diode may be decreased, low-order input current harmonics of the driving system may increase, and a power factor may drop. Therefore, in the present invention, this component is removed in the high-pass filter according to the direction of the inverter current. Herein, the inverter current $i_{inv}$ may be calculated as:

$$i_{inv} = i_a d_a + i_b d_b + i_c d_c \quad (2)$$

In the formula, $i_a$, $i_b$, and $i_c$ are phase currents corresponding to the three phases outputted by the permanent magnet synchronous motor, and $d_a$, $d_b$, and $d_c$ are duty ratios corresponding to the three phases outputted by the permanent magnet synchronous motor.

A cut-off frequency $\omega_H$ of the high-pass filter is:

$$\omega_H \leq \frac{\omega_r}{2} \quad (3)$$

$$\omega_r = \frac{1}{\sqrt{L_g C_{dc}}} \quad (4)$$

In the formula, $L_g$ is a grid-side input inductor, $C_{dc}$ is a bus capacitor, and $\omega_r$ is a resonance frequency between $L_g$ and $C_{dc}$. Within the range of formula (3), the cut-off frequency $\omega_H$ of the high-pass filter in the present invention is as small as possible.

S2: a bus voltage resonance component is multiplied by a feedback proportional gain to obtain a damping current of the system.

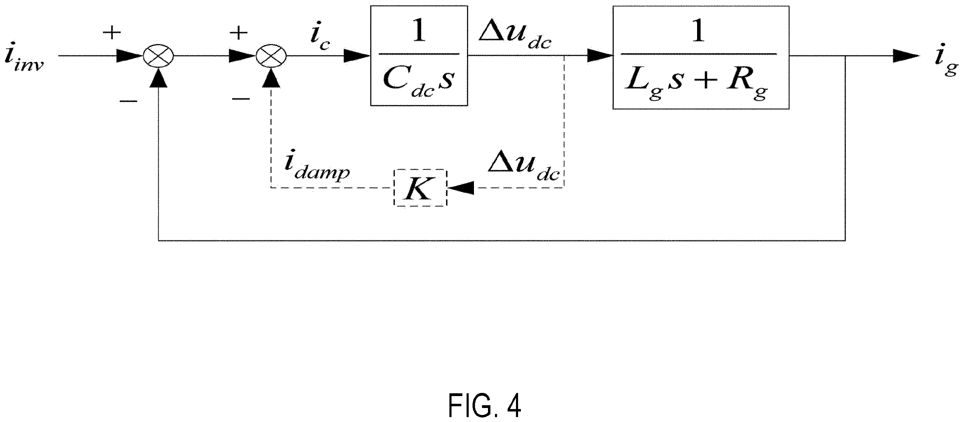

To be specific, a bus voltage damping feedback loop is constructed. As shown in FIG. 4, the feedback loop is established between the bus voltage and the damping current, that is, the bus voltage resonance component $\Delta u_{dc}$ extracted in step S1 is multiplied by the feedback proportional gain, and the damping current $i_{damp}$ of the system is obtained and is calculated as:

$$i_{damp} = K \Delta u_{dc} \quad (5)$$

In the formula, $K$ is the feedback proportional gain and may be determined according to a damping ratio of the system and is calculated as:

$$K = 2\varepsilon \sqrt{\frac{C_{dc}}{L_g}} \quad (6)$$

In the formula, $\varepsilon$ is the damping ratio of the electrolytic capacitor-free permanent magnet synchronous motor variable frequency driving system, and the value of the damping ratio in the embodiments of the present invention is $\varepsilon$ = 0.707.

S3: the damping current is multiplied by a current bus voltage to obtain equivalent damping power at an input side of the inverter, and LC oscillation at an input side of the driving system is converted to an output side of the inverter.

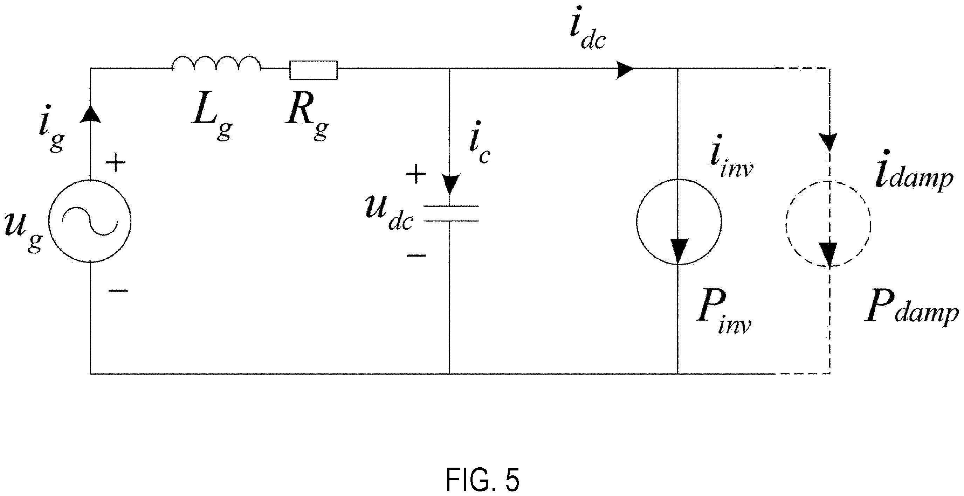

To be specific, with reference to FIG. 5, equivalent damping power $P_{damp}$ at the input side of the inverter is calculated as:

$$P_{damp} = i_{damp} u_{dc} \quad (7)$$

S4: the equivalent damping power at the input side of the inverter is divided by a current output current of the inverter to obtain an equivalent damping output voltage of the inverter, and damping injection voltages of the equivalent damping output voltage allocated to a $\alpha$ axis and a $\beta$ axis are calculated according to currents of the $\alpha$ axis and the $\beta$ axis of the motor.

To be specific, the equivalent damping output voltage of the inverter, that is, the injection damping voltage $\Delta u_{\alpha\beta}$ of the motor, is calculated as:

$$\Delta u_{\alpha\beta} = \frac{P_{damp}}{\sqrt{i_\alpha^2 + i_\beta^2}} \quad (8)$$

Herein, $i_\alpha$ and $i_\beta$ are the currents of the $\alpha$ axis and the $\beta$ axis in a $\alpha\beta$ coordinate system.

According to the currents $i_\alpha$ and $i_\beta$ in the stationary coordinate system of the motor, the damping voltage $\Delta u_\alpha$ allocated to the $\alpha$ axis and the damping voltage $\Delta u_\beta$ allocated to the $\beta$ axis are calculated as:

$$\begin{cases} \Delta u_\alpha = \Delta u_{\alpha\beta} \dfrac{i_\alpha}{\sqrt{i_\alpha^2 + i_\beta^2}} \\[3mm] \Delta u_\beta = \Delta u_{\alpha\beta} \dfrac{i_\beta}{\sqrt{i_\alpha^2 + i_\beta^2}} \end{cases} \quad (9)$$

S5: the equivalent damping output voltage is superimposed onto the damping voltage of the $\alpha$ axis and the damping voltage of the $\beta$ axis, so that the resonance component is absorbed by a motor current, and the LC resonance suppression is implemented.

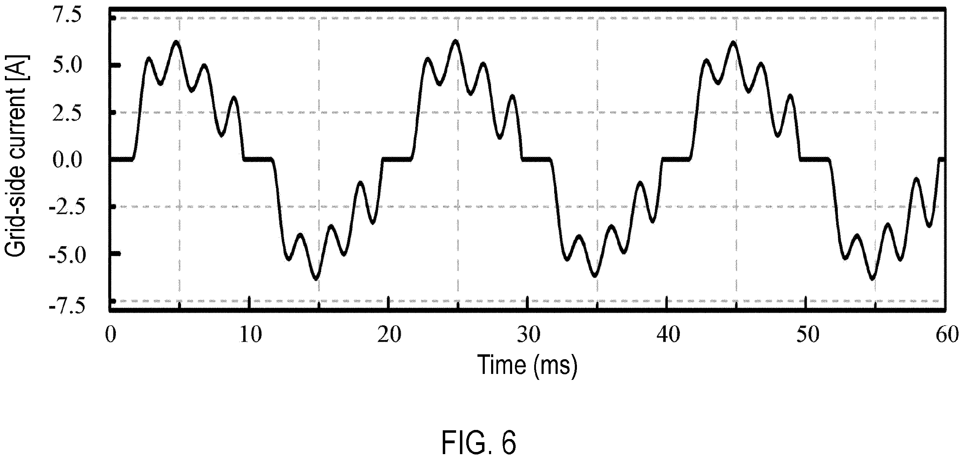

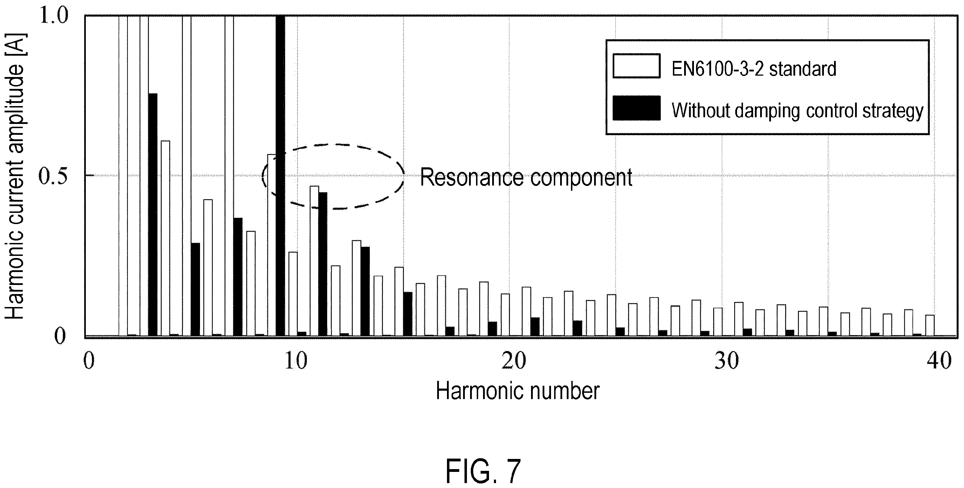

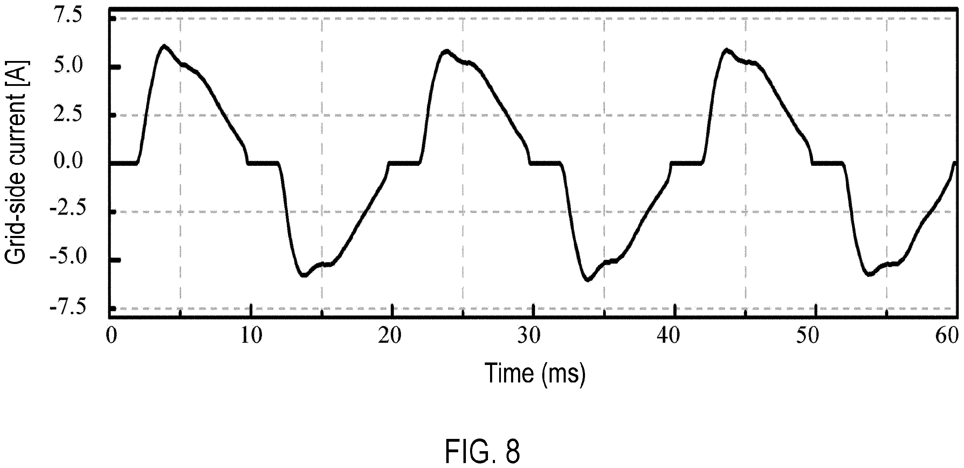

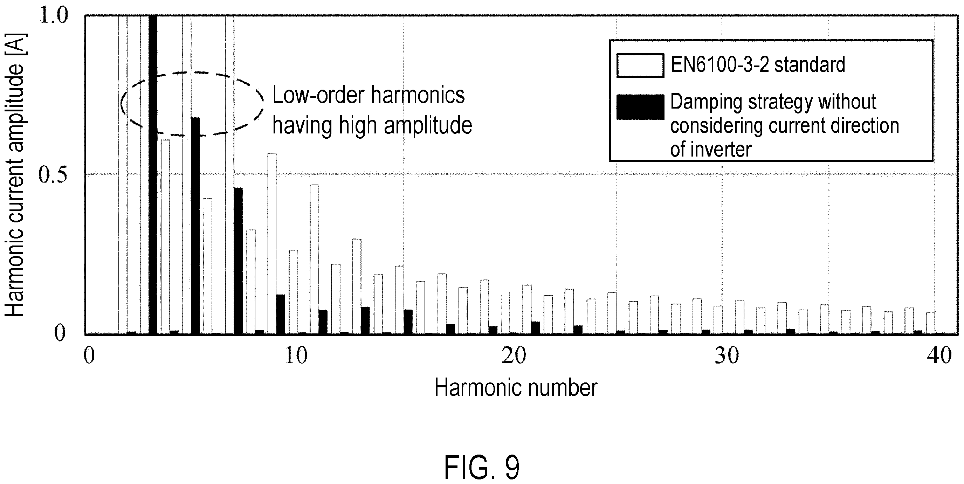

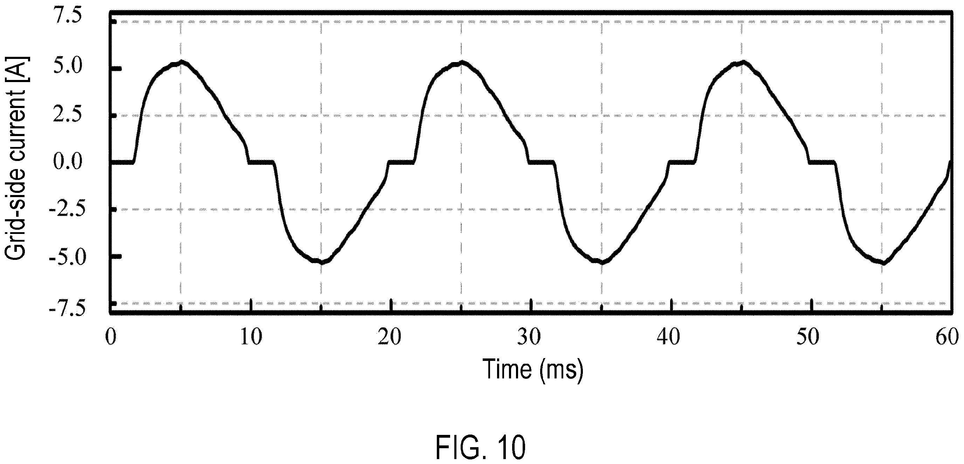

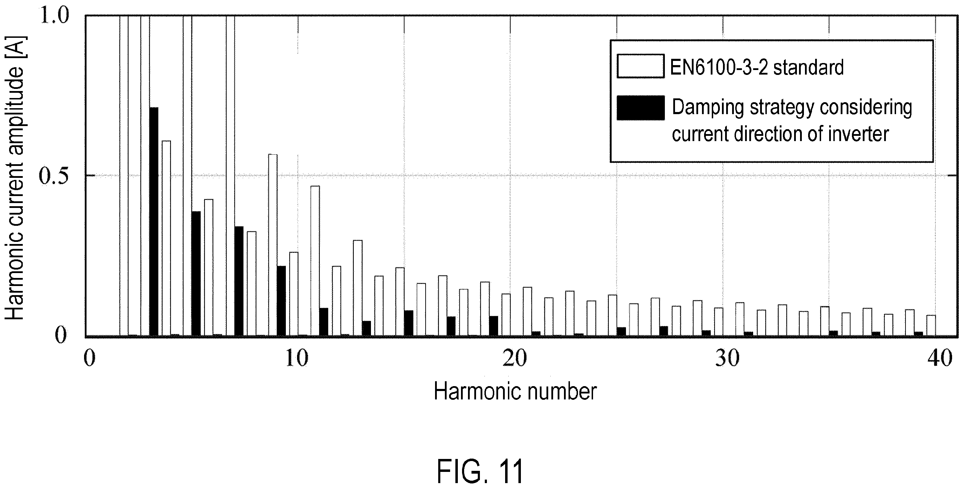

In order to verify the effectiveness of the method of the present invention, different damping control methods are used for grid-side current control in the embodiments of the present invention. FIG. 6 and FIG. 7 respectively are a waveform diagram and a harmonic analysis diagram of a grid-side current without the use of a suppression method. FIG. 8 and FIG. 9 respectively are a waveform diagram and a harmonic analysis diagram of a grid-side current with the use of a conventional damping control method, i.e., a resonance suppression method not considering the inverter current direction. FIG. 10 and FIG. 11 respectively are a waveform diagram and a harmonic analysis diagram of a grid-side current with the use of the resonance suppression method provided by the present invention. It can be seen from FIG. 6 and FIG. 7 that the grid-side input current contains obvious resonance components. When the amplitude of the resonant current increases further, the capacitor and the inverter may be damaged, and stability and reliability of the system is thereby affected. Herein, near the resonance frequency, the current harmonics are excessively large and exceeds the EN61000-3-2 standard, causing pollution to the grid current. It can be seen from FIG. 8 and FIG. 9 that the resonance is effectively suppressed. Since the current direction of the inverter is not considered, the waveform of the grid-side current is similar to a triangular wave, and its low-order harmonic amplitude may be large, so the grid-side power factor is reduced. It can be seen from FIG. 10 and FIG. 11 that the waveform of the grid-side current is closer to a sine wave, and the rectifier bridge diode has a long conduction time, which not only effectively suppresses the LC resonance, but also improves the system grid-side input power factor.

**Claims**

1. A resonance suppression method for an electrolytic capacitor-free variable frequency driving system, comprising:

    S1: extracting, by a pre-designed high-pass filter, a bus voltage harmonic component;
    S2: multiplying a bus voltage resonance component by a feedback proportional gain to obtain a damping current of a system;
    S3: multiplying the damping current by a current bus voltage to obtain equivalent damping power at an input side of an inverter, and converting LC oscillation at an input side of the driving system to an output side of the inverter;
    S4: dividing the equivalent damping power at the input side of the inverter by a current output current of the inverter to obtain an equivalent damping output voltage of the inverter, and calculating damping injection voltages of the equivalent damping output voltage allocated to a $\alpha$ axis and a $\beta$ axis according to currents of the $\alpha$ axis and the $\beta$ axis of a motor;
    S5: superimposing the equivalent damping output voltage onto a damping voltage of the $\alpha$ axis and a damping voltage of the $\beta$ axis, so that a resonance component is absorbed by a motor current, and LC resonance suppression is implemented,
    wherein
    the equivalent damping output voltage $\Delta u_{\alpha\beta}$ of the inverter in step S4 is calculated as:

$$\Delta u_{\alpha\beta} = \frac{P_{damp}}{\sqrt{i_\alpha^2 + i_\beta^2}}$$

    wherein $i_\alpha$ and $i_\beta$ are the currents of the $\alpha$ axis and the $\beta$ axis in a $\alpha\beta$ coordinate system, and $P_{damp}$ is the equivalent damping power at the input side of the inverter,
    **characterized in that**
    the damping injection voltages $\Delta u_\alpha$ and $\Delta u_\beta$ of the $\alpha$ axis and the $\beta$ axis in step S4 are calculated as:

$$\begin{cases} \Delta u_\alpha = \Delta u_{\alpha\beta} \dfrac{i_\alpha}{\sqrt{i_\alpha^2 + i_\beta^2}} \\[4mm] \Delta u_\beta = \Delta u_{\alpha\beta} \dfrac{i_\beta}{\sqrt{i_\alpha^2 + i_\beta^2}} \end{cases} .$$

2. The resonance suppression method for the electrolytic capacitor-free variable frequency driving system according to claim 1, **characterized in that** a cut-off frequency $\omega_H$ of the pre-designed high-pass filter is:

$$\omega_H \leq \frac{\omega_r}{2}$$

$$\omega_r = \frac{1}{\sqrt{L_g C_{dc}}}$$

in the formula, $L_g$ is a grid-side input inductor, $C_{dc}$ is a bus capacitor, and $\omega_r$ is a resonance frequency between $L_g$ and $C_{dc}$.

**3.** The resonance suppression method for the electrolytic capacitor-free variable frequency driving system according to claim 2, **characterized in that** a bus voltage harmonic component $\Delta u_{dc}$ is extracted according to the following formula

$$\Delta u_{dc} = \begin{cases} \dfrac{s}{s + \omega_H}(u_{dc} - |u_g|) & i_{inv} > 0 \\ 0 & i_{inv} <= 0 \end{cases}$$

in the formula, $u_{dc}$ is a bus voltage of the driving system, $u_g$ is a grid-side input voltage, that is, a fundamental component of the bus voltage, and $i_{inv}$ is an input current of the inverter.

**4.** The resonance suppression method for the electrolytic capacitor-free variable frequency driving system according to claim 1 or 2, **characterized in that** the feedback proportional gain K in step S2 is:

$$K = 2\varepsilon \sqrt{\frac{C_{dc}}{L_g}}$$

in the formula, $\varepsilon$ is a damping ratio of an electrolytic capacitor-free permanent magnet synchronous motor variable frequency driving system.

**5.** A resonance suppression system for an electrolytic capacitor-free variable frequency driving system, **characterized in that** the system adopts the resonance suppression method for the electrolytic capacitor-free variable frequency driving system according to any one of claims 1 to 4.

**Patentansprüche**

**1.** Verfahren zur Resonanzunterdrückung für ein elektrolytkondensatorfreies Antriebssystem mit variabler Frequenz, umfassend:

S1: Extrahieren einer harmonischen Komponente der Busspannung durch einen vorgefertigten Hochpassfilter;
S2: Multiplizieren einer Busspannungs-Resonanzkomponente durch eine proportionale Rückkopplungsverstärkung, um einen Dämpfungsstrom eines Systems zu erhalten;
S3: Multiplizieren des Dämpfungsstroms mit einer aktuellen Busspannung, um eine äquivalente Dämpfungsleistung an einer Eingangsseite eines Wechselrichters zu erhalten, und Umwandeln der LC-Schwingung an einer Eingangsseite des Antriebssystems zu einer Ausgangsseite des Wechselrichters;
S4: Dividieren der äquivalenten Dämpfungsleistung an der Eingangsseite des Wechselrichters durch einen aktuellen Ausgangsstrom des Wechselrichters, um eine äquivalente Dämpfungsausgangsspannung des Wechselrichters zu erhalten, und Berechnen von Dämpfungs-Einspeisespannungen der äquivalenten Dämpfungsausgangsspannung, die einer $\alpha$ Achse und einer $\beta$ Achse gemäß den Strömen der $\alpha$ Achse und der $\beta$ Achse eines Motors zugeordnet sind;
S5: Überlagern der äquivalenten Dämpfungsausgangsspannung auf einer Dämpfungsspannung der $\alpha$ Achse und einer Dämpfungsspannung der $\beta$ Achse, so dass eine Resonanzkomponente durch einen Motorstrom absorbiert wird und eine LC-Resonanzunterdrückung implementiert wird,
wobei die äquivalente Dämpfungsausgangsspannung $\Delta u_{\alpha\beta}$ des Wechselrichters in Schritt S4 berechnet wird

durch:

$$\Delta u_{\alpha\beta} = \frac{P_{damp}}{\sqrt{i_\alpha^2 + i_\beta^2}}$$

wobei $i_\alpha$ und $i_\beta$ Ströme von der $\alpha$ Achse und der $\beta$ Achse in einem $\alpha\beta$ Koordinatensystem sind, und $P_{damp}$ die äquivalente Dämpfungsleistung auf der Eingangsseite des Wechselrichters ist, **dadurch gekennzeichnet, dass** die Dämpfungs-Einspeisespannungen $\Delta u_\alpha$ und $\Delta u_\beta$ der $\alpha$ Achse und der $\beta$ Achse in Schritt S4 berechnet werden durch:

$$\begin{cases} \Delta u_\alpha = \Delta u_{\alpha\beta} \dfrac{i_\alpha}{\sqrt{i_\alpha^2 + i_\beta^2}} \\[4mm] \Delta u_\beta = \Delta u_{\alpha\beta} \dfrac{i_\beta}{\sqrt{i_\alpha^2 + i_\beta^2}} \end{cases} .$$

2. Verfahren zur Resonanzunterdrückung für das elektrolytkondensatorfreie Antriebssystem mit variabler Frequenz gemäß Anspruch 1, **dadurch gekennzeichnet, dass** eine Grenzfrequenz $\omega_H$ des vorgefertigten Hochpassfilters ist:

$$\omega_H \leq \frac{\omega_r}{2}$$

$$\omega_r = \frac{1}{\sqrt{L_g C_{dc}}}$$

in der Formel, $L_g$ ein Gitterseitige Eingangsinduktor ist, $C_{dc}$ ein Buskondensator ist, und $\omega_r$ eine Resonanzfrequenz zwischen $L_g$ und $C_{dc}$ ist.

3. Verfahren zur Resonanzunterdrückung für das elektrolytkondensatorfreie Antriebssystem mit variabler Frequenz gemäß Anspruch 2, **dadurch gekennzeichnet, dass** eine Busspannungs- harmonische Komponente $\Delta u_{dc}$ gemäß der folgenden Formel extrahiert wird:

$$\Delta u_{dc} = \begin{cases} \dfrac{s}{s + \omega_H}(u_{dc} - |u_g|) & i_{inv} > 0 \\[4mm] 0 & i_{inv} <= 0 \end{cases}$$

in der Formel, $u_{dc}$ eine Busspannung des Antriebssystems ist, $u_g$ eine Gitterseitige Eingangsspannung ist, das heißt eine fundamentale Komponente der Busspannung, und $i_{inv}$ ein Eingangsstrom des Wechselrichters ist.

4. Verfahren zur Resonanzunterdrückung für das elektrolytkondensatorfreie Antriebssystem mit variabler Frequenz gemäß Anspruch 1 oder 2, **dadurch gekennzeichnet, dass** die proportionale Rückkopplungsverstärkung $K$ in Schritt S2 ist:

$$K = 2\varepsilon \sqrt{\frac{C_{dc}}{L_g}}$$

in der Formel, $\varepsilon$ ein Dämpfungsverhältnis eines elektrolytkondensatorfreien Permanentmagnet-Synchronmotors des Antriebsystems mit variabler Frequenz ist.

5. Resonanzunterdrückungssystem für ein elektrolytkondensatorfreies Antriebssystem mit variabler Frequenz, **dadurch gekennzeichnet, dass** das System das Resonanzunterdrückungsverfahren für das elektrolytkondensatorfreie Antriebssystem mit variabler Frequenz gemäß einem der Ansprüche 1 bis 4 anwendet.

**Revendications**

1. Procédé de suppression de résonance pour un système d'entraînement à fréquence variable sans condensateur électrolytique, comprenant :

    S1 : l'extraction, par un filtre passe-haut préalablement conçu, d'une composante harmonique de tension de bus ;
    S2 : la multiplication d'une composante de résonance de tension de bus par un gain proportionnel de rétroaction pour obtenir un courant d'amortissement d'un système ;
    S3 : la multiplication du courant d'amortissement par une tension de bus de courant pour obtenir une puissance d'amortissement équivalente au niveau d'un côté d'entrée d'un onduleur, et la conversion d'une oscillation LC au niveau d'un côté d'entrée du système d'entraînement à un côté de sortie de l'onduleur ;
    S4 : la division de la puissance d'amortissement équivalente au niveau du côté d'entrée de l'onduleur par un courant de sortie de courant de l'onduleur pour obtenir une tension de sortie d'amortissement équivalente de l'onduleur, et le calcul de tensions d'injection d'amortissement de la tension de sortie d'amortissement équivalente attribuée à un axe $\alpha$ et à un axe $\beta$ en fonction de courants de l'axe $\alpha$ et de l'axe $\beta$ d'un moteur ;
    S5 : la superposition de la tension de sortie d'amortissement équivalente sur une tension d'amortissement de l'axe $\alpha$ et une tension d'amortissement de l'axe $\beta$, de sorte qu'une composante de résonance soit absorbée par un courant de moteur, et une suppression de résonance LC soit mise en oeuvre, dans lequel la tension de sortie d'amortissement équivalente $\Delta u_{\alpha\beta}$ de l'onduleur à l'étape S4 est calculée comme suit :

$$\Delta u_{\alpha\beta} = \frac{P_{damp}}{\sqrt{i_\alpha^2 + i_\beta^2}}$$

dans lequel $i_\alpha$ et $i_\beta$ sont les courants de l'axe $\alpha$ et de l'axe $\beta$ dans un système de coordonnées $\alpha\beta$, et $P_{damp}$ est la puissance d'amortissement équivalente au niveau du côté d'entrée de l'onduleur,
**caractérisé en ce que**
les tensions d'injection d'amortissement $\Delta u_\alpha$ et $\Delta u_\beta$ de l'axe $\alpha$ et de l'axe $\beta$ à l'étape S4 sont calculées comme suit :

$$\begin{cases} \Delta u_\alpha = \Delta u_{\alpha\beta} \dfrac{i_\alpha}{\sqrt{i_\alpha^2 + i_\beta^2}} \\[4mm] \Delta u_\beta = \Delta u_{\alpha\beta} \dfrac{i_\beta}{\sqrt{i_\alpha^2 + i_\beta^2}} \end{cases}.$$

2. Procédé de suppression de résonance pour le système d'entraînement à fréquence variable sans condensateur électrolytique selon la revendication 1, **caractérisé en ce qu'**une fréquence de coupure $\omega_H$ du filtre passe-haut préalablement conçu est :

$$\omega_H \le \frac{\omega_r}{2}$$

$$\omega_r = \frac{1}{\sqrt{L_g C_{dc}}}$$

dans la formule, $L_g$ est un inducteur d'entrée côté réseau, $C_{dc}$ est un condensateur de bus, et $\omega_r$ est une fréquence

de résonance entre $L_g$ et $C_{dc}$.

3. Procédé de suppression de résonance pour le système d'entraînement à fréquence variable sans condensateur électrolytique selon la revendication 2, **caractérisé en ce qu'**une composante harmonique de tension de bus $\Delta u_{dc}$ est extraite selon la formule suivante :

$$\Delta u_{dc} = \begin{cases} \dfrac{s}{s + \omega_H} \left( u_{dc} - |u_g| \right) i_{inv} > 0 \\ 0 \; i_{inv} <= 0 \end{cases}$$

dans la formule, $u_{dc}$ est une tension de bus du système d'entraînement, $u_g$ est une tension d'entrée côté réseau, c'est-à-dire une composante fondamentale de la tension de bus, et $i_{inv}$ est un courant d'entrée de l'onduleur.

4. Procédé de suppression de résonance pour le système d'entraînement à fréquence variable sans condensateur électrolytique selon la revendication 1 ou 2, **caractérisé en ce que** le gain proportionnel de rétroaction K à l'étape S2 est :

$$K = 2\varepsilon \sqrt{\dfrac{C_{dc}}{L_g}}$$

dans la formule, $\varepsilon$ est un taux d'amortissement d'un système d'entraînement à fréquence variable de moteur synchrone à aimant permanent sans condensateur électrolytique.

5. Système de suppression de résonance pour un système d'entraînement à fréquence variable sans condensateur électrolytique, **caractérisé en ce que** le système adopte le procédé de suppression de résonance pour le système d'entraînement à fréquence variable sans condensateur électrolytique selon l'une quelconque des revendications 1 à 4.

FIG. 1

EP 3 993 256 B1

FIG. 2

EP 3 993 256 B1

FIG. 3

FIG. 4

EP 3 993 256 B1

FIG. 5

FIG. 6

FIG. 7

EP 3 993 256 B1

FIG. 8

FIG. 9

FIG. 10

EP 3 993 256 B1

FIG. 11

EP 3 993 256 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107689761 A

**Non-patent literature cited in the description**

- **ZHAO NANNAN et al.** An Active Damping Control Method for Reduced DC Link Capacitance IPMSM Drives. *IEEE transactions on Industrial Electronics,* 01 March 2018, vol. 65 (3), 2057-2068

- **LEE WOOK JIN et al.** DC Link Voltage Stabilization for Reduced DC Link Capacitor Inverter. *IEEE transactions on Industrial Electronics,* 01 January 2014, vol. 50 (1), 404-414